# EUROPÄISCHE PATENTSCHRIFT

(11) **EP 1 316 716 B1**
(45) Veröffentlichungstag und Bekanntmachung des Hinweises auf die Patenterteilung: **12.11.2008**
(21) Anmeldenummer: 02024697.1
(22) Anmeldetag: 06.11.2002
(51) Int. Cl.: F02B 27/02, F02B 29/08, F02M 23/06

(54) **Ansaugvorrichtung für eine Brennkraftmaschine mit Impulsaufladung**
Intake device for an internal combustion engine with impulse charging
Système d'admission pour un moteur à combustion interne avec alimentation par impulsions

(30) Priorität: 03.12.2001 DE 10159250
(43) Veröffentlichungstag der Anmeldung: 04.06.2003
(73) Patentinhaber: Mann + Hummel GmbH, 71638 Ludwigsburg (DE)
(72) Erfinder: Linhart, Jochen, 71409 Schwaikheim (DE); Fasold, Michael, 71549 Auenwald (DE)
(74) Vertreter: Voth, Gerhard

(56) Entgegenhaltungen:
- EP-A- 0 508 508
- DE-A- 3 737 820
- DE-A- 19 908 435
- DE-A- 19 932 826
- US-A- 4 461 151
- US-A- 4 901 680

## Beschreibung

### Stand der Technik

Die Erfindung betrifft eine Ansaugvorrichtung für eine Brennkraftmaschine in der im Saugkanal ein zusätzliches Verschlußorgan zur Abteilung eines Speicherkanals vorgesehen ist, nach dem Oberbegriff des Patentanspruches 1, (siehe DE-A-3 737 820).

Die Verwendung von Verschlußorganen für die Saugkanäle von Brennkraftmaschinen ist allgemein bekannt. Für Brennkraftmaschinen ergibt sich eine besonders anspruchsvolle Verwendung für Klappen, wenn eine sogenannte Impulsaufladung erreicht werden soll. Zu diesem Zweck müssen schnell schaltende Klappen zur Realisierung kürzester Schaltzeiten eingesetzt werden. Entsprechend thermodynamisch angestellter Berechnungen sind hierbei Schaltzeiten von 2 ms zu verwirklichen.

Die kurzen Schaltzeiten für die Impulsaufladung von Brennkraftmaschinen sind notwendig, da das Schaltverhalten der Klappe an den Aufladungsprozeß für die Zylinder angepasst werden muss, welcher direkt abhängig von den Ventilöffnungszeiten des Einlaßventil des Zylinders ist. Unter der Impulsaufladung versteht man ein Verfahren, bei dem der Einlasskanal mittels einer Klappe stromaufwärts des Einlaßventils des Zylinders zeitweilig verschlossen wird, so dass sich beim Ansaughub des Kolbens bei offenem Einlaßventil stromabwärts der Klappe ein Unterdruck einstellt. Wenn die Klappe bei vorhandenem Unterdruck geöffnet wird, beschleunigt der Unterdruck die freigegebene Ladungssäule an Ansaugluft hinter der Klappe, wodurch diese mit hohem Impuls in den Brennraum einströmt und dort eine größere Füllung bewirkt. Dieses Verfahren ist beispielsweise in DE 199 08 435 A1 beschrieben.

Dieses Dokument stellt zur Verwirklichung dieses Verfahrens einen Klappenmechanismus vor, der in Schließrichtung vorgespannt ist, wodurch ein Verschluß der Klappe mit Hilfe eines Elektromagneten erfolgen kann. Geöffnet wird die Klappe aufgrund des Unterdrucks, der zwischen der Klappe und dem Einlaßventil entsteht, in dem Bereich des Saugkanals, der als Speicherkanal bezeichnet wird.

Zur Erreichung der beschriebenen hohen Schaltzeiten ist jedoch ein enormer Aufwand an Komponenten notwendig. Insbesondere das Schließen des Verschlußorgans in der geforderten kurzen Zeit wirft Probleme auf, da die Schaltung entgegen der im Ansaugtrakt befindlichen Strömung erfolgen muß.

Jedoch ist auch die Schaltgeschwindigkeit beim Schließen von hervorragender Bedeutung, da hierdurch ein Überdruck im Kanalabschnitt zwischen Organ und Einlaßventil erzeugt werden soll. Dieser Überdruck dient bei Öffnung des Einlaßventils zur sogenannten Restgasspülung im Zylinder, durch die die Abgasrückstände aus dem Brennraum vollständig entfernt werden können bevor das Auslaßventil wieder schließt.

Aufgabe der Erfindung ist es daher, eine Ansaugvorrichtung zu schaffen, die mit begrenztem konstruktivem Aufwand zur Verwendung eines zusätzlichen Verschlußorgans zwecks Restgasspülung oder Impulsaufladung verwendbar ist. Diese Aufgabe wird durch die Merkmale des Patentanspruches 1 gelöst.

### Vorteile der Erfindung

Die erfindungsgemäße Ansaugvorrichtung weißt in bekannterweise einen Saugkanal auf, der einen Einlaß mit den zylinderseitigen Austritten für die Verbrennungsluft verbindet. Als Ansaugvorrichtung ist also im weiteren Sinne derjenige Abschnitt des gesamten Ansaugweges der Verbrennungsluft gemeint, welcher zur Installation eines sogenannten Speicherkanals notwendig ist. Der Speicherkanal ist gebildet als der Abschnitt, der sich zwischen einem zusätzlichen Verschlußorgan in der Ansaugvorrichtung und dem Einlaßventil befindet. In diesem Speicherkanal kann entweder ein Überdruck für die Restgasspülung des Zylinders bzw. ein Unterdruck für die Impulsaufladung gespeichert werden.

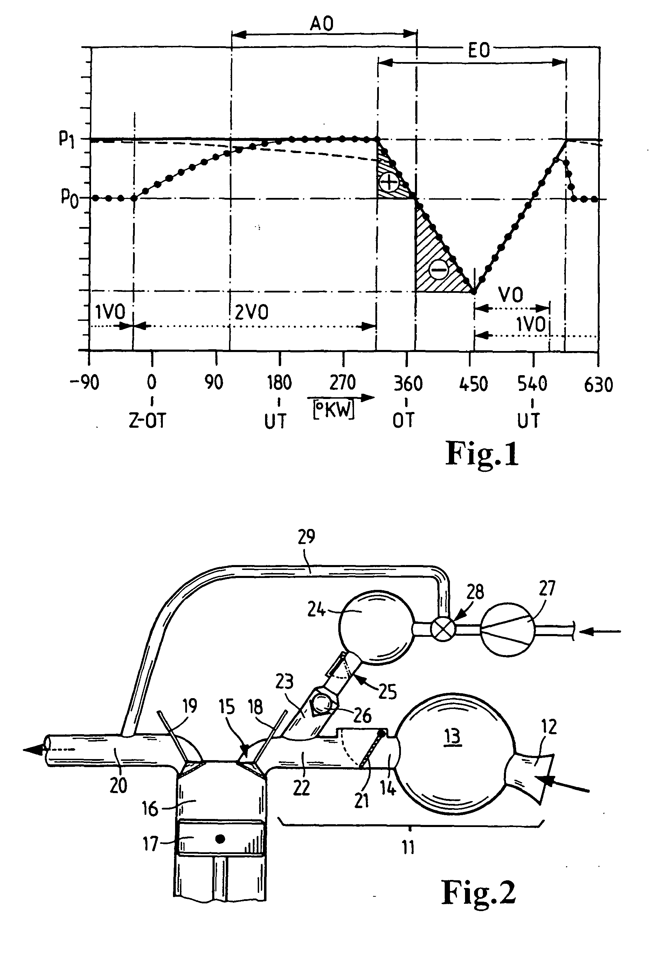

Gekennzeichnet ist die Erfindung dadurch, dass zusätzlich ein Druckspeicher vorgesehen ist, der über einen Verbindungskanal mit dem Speicherkanal verbunden ist. Auf diese Weise kann aus dem Druckspeicher ein Überdruck gebildet werden, der zu einer Befüllung des Speicherkanals und Aufbau eines entsprechenden Überdrucks von zum Beispiel 0,4 bar verwendet werden kann. Geregelt wird dieser Vorgang durch ein zweites Verschlußorgan, welches in dem Verbindungskanal angeordnet ist. Dieses Verschlußorgan muß eine Absperrung der Verbindungsleitung gewährleisten. Zusätzlich kann das Verschlußorgan einen Rückschlagventilmechanismus enthalten, der dafür sorgt, dass aus dem Speicherkanal keine Luft in den Druckspeicher zurückfließen kann. Auf diese Weise kann auch der Druckspeicher nach dem Mechanismus der Impulsaufladung einen höheren Überdruck in dem Speicherkanal aufbauen als Unterdruckspeicher vorhanden. Der Vorteil in der beschriebenen Konstruktion liegt darin, dass durch den Druckspeicher das erste Verschlußorgan im Saugkanal entlastet wird. Insbesondere sind die Anforderungen an die Verschlußzeiten geringer als ohne Verwendung des Druckspeichers, da der Überdruck über den Druckspeicher aufgebaut werden kann. Ein schnelles Schließen des Impulskanals um Mittels des Zylinders einen Überdruck im Speicherkanal aufzubauen, ist nämlich nicht notwendig (vergleiche hierzu Beschreibung von Figur 1). Gerade für die kurzen Schaltzeiten ist jedoch das Schließen der Klappe wesentlich kritischer. Hierbei muss auch beachtet werden, dass während des Schließvorganges der Klappe selbige auf einer Dichtfläche zum Anschlag kommt, wodurch eine starke Abbremsung erfolgt. Dies führt zu einer enormen mechanischen Belastung sowohl der Klappe als auch der Lagerung des Antriebs, welche durch eine Verlängerung der erlaubten Schaltzeiten wesentlich vermindert werden kann. Dadurch wird die Klappe kostengünstiger in der Herstellung, zuverlässiger in der Funktion und weist eine längere Lebenszeit auf.

Die Öffnungszeiten lassen sich im Vergleich hierzu wesentlich leichter erreichen. Die Klappe kann in einen Totraum des Saugkanals hineinschwingen, in dem der Anschlag gedämpft werden kann. Außerdem wird das Öffnen der Klappe durch den Unterdruck im Speicherkanal unterstützt, zumindest wenn diese mit ihrer Drehachse außerhalb der Kanalstruktur angeordnet ist und in einen Totraum schwingt. Daher ist es vorteilhaft, das Verschlußorgan als Schwenkklappe mit einem Flügel auszubilden. Dies schließt jedoch die Gestaltung als zweiflüglige Klappe mit mittiger oder außermittiger Drehachse nicht aus.

Eine vorteilhafte Weiterbildung der Erfindung sieht vor, dass das Verschlußorgan aus einer drehbaren Scheibe besteht. Diese kann so angeordnet werden, dass die Drehachse außerhalb des Querschnitts des Saugkanals liegt, so daß durch Drehung der Scheibe ein Fenster, welches auf selbiger angeordnet ist, in Deckung mit dem Querschnitt des Saugkanals gebracht werden kann. Dies ist gleichzusetzen mit der Offenstellung des Verschlußorgans. Durch weitere Drehung kann das Fenster außerhalb des Querschnitts gebracht werden, wodurch ein Verschluß des Saugkanals stattfindet.

Alternativ hierzu kann das Verschlußorgan auch als Drehschieber ausgebildet sein. In diesem Fall weist es einen zylindrischen Körper auf, der den Saugkanal schneidet und drehbar gelagert ist. Durch Drehung kann eine Durchgangsöffnung dieses Zylinders in Deckung mit dem Querschnitt des Saugkanals gebracht werden. Durch weitere Drehung wird diese Deckung wieder aufgehoben, wodurch ein Verschluß des Saugkanals zustande kommt. Sind mehrere Saugkanäle parallel zueinander angeordnet, so können die Drehschieber auf einer gemeinsamen Drehachse liegen. Weiterhin ist es möglich, die Durchgangsöffnungen alle auf einem gemeinsamen Walzenkörper zu integrieren. Dieser kann in seiner Drehung derart ausgebildet werden, daß die Saugkanäle entsprechend der Phasenverschiebung der Zylinder getaktet werden.

Die Verwendung von Drehschiebern macht insbesondere eine kontinuierliche Drehung dieser Bauteile möglich. Hierdurch lassen sich auftretende Lagerkräfte weiter minimieren. Der Antrieb der Verschlußorgane in den Verbindungskanälen kann dann durch ein drehzahlabhängig rotierendes Bauteil der Brennkraftmaschine erfolgen. Beispielsweise können die Drehschieber oder die Scheiben von der Kurbelwelle oder den Nockenwellen angetrieben werden.

Eine vorteilhafte Variante des Druckspeichers ergibt sich, wenn dieser durch eine Sekundärluftpumpe oder einen Sekundärluftlader gespeist wird. Diese ist normalerweise zur Einleitung von Frischluft in die Abgasanlage zuständig. Diese Aufgabe muss jedoch nur beim Kaltstart der Brennkraftmaschine in den ersten Minuten des Betriebs übernommen werden. Anschließend steht die Sekundärluftpumpe bzw. -lader einer anderen Aufgabe zur Verfügung, die in der Speisung des Druckspeichers liegen kann. Auf diese Weise kann eine zusätzliche Pumpe für den Druckspeicher eingespart werden, wodurch die Wirtschaftlichkeit des erfindungsgemäßen Lösungsvorschlages steigt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

### Weitere Einzelheiten der Erfindung werden in der Zeichnung anhand von schematischen Ausführungsbeispielen beschrieben. Hierbei zeigen

- Figur 1: die Druckverteilung im Speicherkanal, schematisch,
- Figur 2: den Aufbau der erfindungsgemäßen Ansaugvorrichtung, schematisch,

- Figur 3: die Schaltcharakteristik verschiedener erster Verschlußorgane, graphisch,
- Figur 4: ein Verschlußorgan mit rotierender Scheibe, schematisch, perspektivisch
- Figur 5: einen Drehschieber, schematisch, perspektivisch und
- Figur 6: die Anordnung mehrerer Drehschieber auf einer Schaltwalze.

### Beschreibung der Ausführungsbeispiele

Der Vorgang der Restgasspülung bzw. der Impulsaufladung läßt sich der graphischen Darstellung gemäß Figur 1 entnehmen. Dargestellt sind die vier Takte einer Brennkraftmaschine mit dem oberen Totpunkt bei der Zündung (Z-OT), dem unteren Totpunkt (UT), dem nächsten oberen Totpunkt (OT) und dem letzten unteren Totpunkt (UT). Weiterhin ist der Zeitraum der Öffnung des Auslaßventiles (AO) und der Zeitraum der Öffnung des Einlaßventils (EO) dargestellt. Zuletzt ist auch die Schaltzeit eines Verschlußorganes gemäß des Standes der Technik (VO) und das Zusammenwirken der ersten und zweiten Verschlußorgane gemäß der Erfindung (1VO, 2VO) dargestellt.

Die durchgezogene Linie gibt den Druckverlauf im Speicherkanal bei Verwendung des konventionellen Verschlußorgans VO an. Vor Öffnen des Einlaßventils befindet die sich auf einem Druckniveau p₁, der ca. 0,4 bar über dem Umgebungsdruck p₀ liegt. Dieser Überdruck wird nach Öffnen des Einlaßventils auf den Umgebungsdruck abgebaut, wodurch das Restgas aus dem Brennraum des Zylinders gespült wird, siehe mit Plus bezeichneter schraffierter Bereich. Während sich der Kolben zum unteren Totpunkt bewegt, wird anschließend ein Unterdruck im Brennraum aufgebaut, welcher durch ein Minus gekennzeichnet ist. Bevor jedoch der Zylinder den unteren Totpunkt endgültig erreicht hat, wird das Verschlußorgan VO geöffnet, wodurch der Unterdruck zudem als Impulsaufladung bezeichneten Aufladeeffekt im Brennraum führt, der wieder auf dem Druckniveau p₁ liegt. Jedoch wird das Verschlußorgan VO vor erreichen dieses Druckniveaus geschlossen, so daß im Druckkanal Verbrennungsluft für den nächsten Restgasspülungsvorgang gespeichert wird. Daher sind die Eingangs erwähnten enorm hohen Verschlußgeschwindigkeiten des Verschlußorgans VO notwendig.

Im Unterschied hierzu sind bei Verwendung von einem Druckspeicher entsprechend der Erfindung zwei Verschlußorgane 1VO und 2VO im Einsatz. Es wird deutlich, daß das Verschlußorgan 1VO gleichzeitig geöffnet wird, wie gemäß dem Stand der Technik (VO) jedoch wird es nicht vor dem Einlaßventil verschlossen, so daß sich im Brennraum ein höherer Überdruck einstellt, dafür im Druckkanal jedoch der Umgebungsdruck, da dieser Bereich des Saugkanals von dem Druckimpuls nicht mehr profitiert. Während der nun folgenden Zeit, in der das Einlaßventil geschlossen ist, kann das erste Verschlußorgan vergleichsweise langsam geschlossen und das zweite Verschlußorgan 2VO geöffnet werden. Hierdurch kann über den Druckspeicher der gewünschte Druck p₁ aufgebaut werden, wobei das zweite Verschlußorgan bis zum Öffnen des Einlaßventils wieder geschlossen werden muß. Dabei kann gleichzeitig ein Druckverlust ausgeglichen werden, der entsprechend der gestrichelt dargestellten Linie ansonsten den Effekt der Restgasspülung beeinträchtigen würde.

Die erfindungsgemäße Vorrichtung zur Durchführung des in Figur 1 beschriebenen Verfahrens ist in Figur 2 dargestellt. Der dort dargestellte Ansaugtrakt 11 weist einen Einlaß 12, einen Sammelraum 13, von diesem abgehende Saugkanäle 14, von denen einer im Schnitt dargestellt ist, mit einem zylinderseitigen Austritt 15 auf. Der Zylinder 16 mit einem Kolben 17 besitzt ein Einlaßventil 18 und ein Auslaßventil 19 welches in eine Abgasanlage 20 führt.

Im Saugkanal 14 ist ein erstes Verschlußorgan 21 angeordnet, welches mit dem Einlaßventil 18 zusammen einen Speicherkanal 22 im Saugkanal 14 abtrennt. In diesen Speicherkanal mündet eine Verbindungsleitung 23 zu einem Druckspeicher 24, welche durch ein zweites Verschlußorgan 25 kombiniert mit einem Rückschlagventil 26 von dem Speicherkanal 22 trennbar ist.

Der Druckspeicher 24 wird durch eine Sekundärluftpumpe 27 gespeist, welche über ein Verteilerventil 28 und einer Sekundärluftleitung 29 ebenfalls zur Sekundärlufteinblasung in die Abgasanlage 20 genutzt werden kann. Die Sekundärluftpumpe 27 ist über den größten Zeitraum des Betriebs der Brennkraftmaschine ungenutzt, so daß diese im gewöhnlichen Betrieb für die Speisung des Druckspeichers 24 zur Verfügung steht.

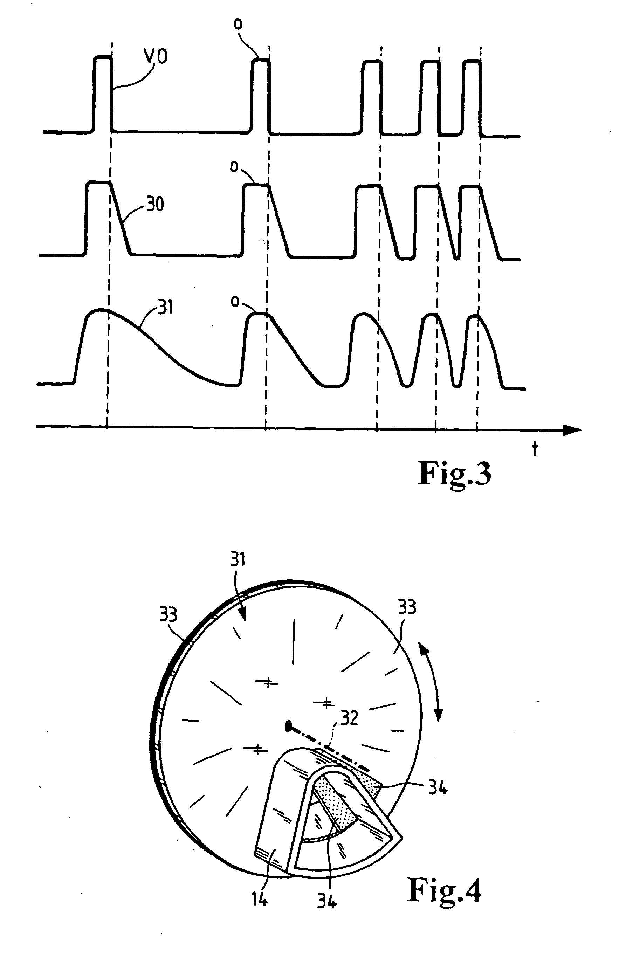

In Figur 3 sind die Schaltvorgänge verschiedener Klappen über die Zeit dargestellt. Die gestrichelten Geraden zeigen dabei die Schaltintervalle, die gemäß Figur 1 bei ungefähr 560°Kurbelwinkel liegen. Dargestellt sind die Charakteristiken eines Verschlußorgans gemäß dem Stand der Technik (VO), einer Schwenkklappe 30, wie sie in Figur 2 angedeutet ist und einer Scheibe 31, wie sie im Folgenden zu Figur 4 beschrieben wird. Es fällt auf, daß die extrem kurzen Schließzeiten des Verschlußorgans VO aufgrund des in Figur 1 beschriebenen Schaltverfahrens für 1VO bei der Schwenkklappe 30 nicht eingehalten werden müssen. Da, wie dargestellt, über die Zeit t bei höheren Drehzahlen die Intervalle immer kürzer werden, muß die Schließzeit jedoch wenigstens so kurz sein, dass der Schließvorgang bis zur nächsten Öffnung abgeschlossen ist. Hierbei sind die Drehzahlgrenzen der Brennkraftmaschine maßgeblich. Das Verschlußorgan VO und die Schwenkklappe 30 haben gemeinsam, daß der Schaltvorgang unabhängig von der Drehzahl immer gleich lang ist. (Bezogen auf offene Klappe, angedeutet mit o).

Hiervon unterscheidet sich die Schaltcharakteristik der Scheibe 31, die mit einer Drehzahl proportional zur Drehzahl der Brennkraftmaschine rotiert. Dieses Schaltprinzip wird erst durch das erfindungsgemäße Schaltverfahren gemäß Figur 1 möglich. Die Scheibe ist so gestaltet, daß die Öffnung in einem sehr kurzen Zeitraum erfolgt (steile Rampe). Die Schließzeit kann länger gewählt werden. Es zeigt sich, daß die Schließzeit aufgrund der variablen Rotationsgeschwindigkeit der Scheibe ebenfalls variabel ist. Dies gilt grundsätzlich auch für die Öffnungszeit, jedoch ist der Anstieg der Rampe so steil, daß der Drehzahlunterschied nicht ins Gewicht fällt. Es muß lediglich gewährleistet sein, daß bei geringen Drehzahlen der Schaltvorgang immer noch genügend schnell erfolgt, da er sich zu höheren Drehzahlen hin nur noch weiter verkürzt.

Die Scheibe 31 ist schematisch in Figur 4 dargestellt und zwar zusammen mit einem Ausschnitt aus dem Saugkanal 14. Die Scheibe weist eine Drehachse 32 auf, um die sie rotieren kann. Genaugenommen handelt es sich in dem Beispiel gemäß Figur 4 um eine Scheibe, die aus zwei Teilscheiben 33 aufgebaut ist. Diese Teilscheiben weisen Fenster 34 auf, die bei einer entsprechenden Synchronisation eine Verkürzung der Schaltzeiten ermöglichen.

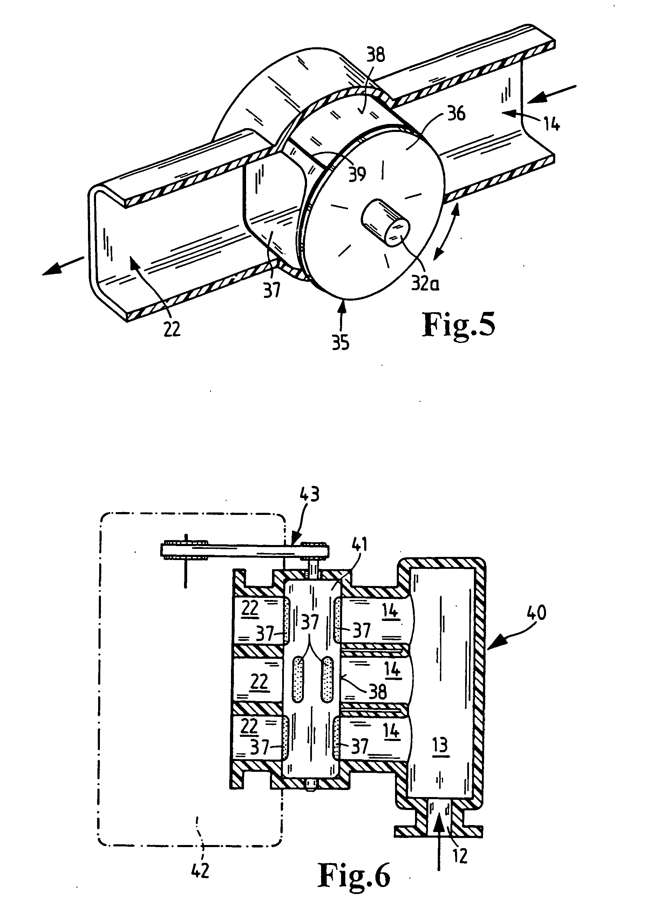

In Figur 5 kann schematisch die Wirkungsweise eines rotierenden Drehschiebers 35 nachvollzogen werden. Dieser hat eine Drehachse 32a und durchdringt mit einem Zylinder 36 den Saugkanal. Je nach Winkelstellung des Drehschiebers führt eine Öffnung 37 im Zylinder zu einem Durchfluß durch den Querschnitt des Saugkanals 14 bzw. zu einem Verschluß durch eine Mantelfläche 38 des Zylinders, die zu diesem Zweck Dichtungen 39 aufweist.

Figur 6 zeigt, wie mehrere Drehschieber eines Saugrohres 40 mit drei Saugkanälen 14 in einen Walzenkörper 41 integriert werden können. Angedeutet ist ebenfalls eine Brennkraftmaschine 42, welche über einen Riemenantrieb 43 eine kontinuierliche Drehung des Walzenkörpers proportional zur Drehzahl der Brennkraftmaschine erzeugt.

## Patentansprüche

1. Ansaugvorrichtung für eine Brennkraftmaschine, aufweisend zumindest
- einen Einlass (12) für die Verbrennungsluft,
- einen Saugkanal (14) pro Zylinder der Brennkraftmaschine, der bis zu einem zylinderseitigen, durch ein Einlassventil (18) verschließbaren Austritt (15) reicht,
- ein erstes Verschlussorgan (21, 30, 31, 35, 41), welches stromaufwärts des Einlassventils (18) im Saugkanal angeordnet ist, wodurch zwischen dem ersten Verschlussorgan und am Einlassventil ein Teil des Saugkanals als Speicherkanal (22) ausgebildet ist,
**dadurch gekennzeichnet, dass** ein Druckspeicher (24) vorgesehen ist, der über einen Verbindungskanal (23) mit dem Speicherkanal verbunden ist und in dem ein zweites Verschlussorgan (25, 26) angeordnet ist, wobei der Druckspeicher von einer Sekundärluftpumpe (27) gespeist wird, welche gleichzeitig zur Einleitung von Frischluft in eine Abgasanlage (20) der Brennkraftmaschine über ein Verteilerventil (28) vorgesehen ist.

2. Ansaugvorrichtung nach Anspruch 1, **dadurch gekennzeichnet, dass** das zweite Verschlussorgan aus einem absperrbaren Rückschlagventil (26) besteht.

3. Ansaugvorrichtung nach einem der vorherigen Ansprüche, **dadurch gekennzeichnet, dass** das erste Verschlussorgan aus einer Schwenkklappe (30) besteht.

4. Ansaugvorrichtung nach Anspruch 3, **dadurch gekennzeichnet, dass** eine Schwenkachse der Schwenkklappe (30) außerhalb des durchflossenen Querschnitts des Saugkanals (14) liegt und die Schwenkrichtung zum Verschließen der Schwenkklappe der Richtung der Strömung der Ansaugluft im Saugkanal im wesentlichen entspricht.

5. Ansaugvorrichtung nach einem der Ansprüche 1 oder 2, **dadurch gekennzeichnet, dass** das erste Verschlussorgan aus einer drehbaren Scheibe (31) besteht, deren Drehachse (32) außerhalb des Querschnitts des Saugkanals (14) liegt und die diesen Querschnitt vollständig schneidet, wobei die Scheibe ein Fenster (34) aufweist, welches in Abhängigkeit von der Winkelstellung der Scheibe den Querschnitt zumindest teilweise freigibt.

6. Ansaugvorrichtung nach einem der Ansprüche 1 oder 2, **dadurch gekennzeichnet, dass** das erste Verschlussorgan aus einem Drehschieber (35) besteht.

7. Ansaugvorrichtung nach Anspruch 6, **dadurch gekennzeichnet, dass** mehrere Saugkanäle vorgesehen sind, welche derart parallel zueinander angeordnet sind, dass die Drehschieber auf einer gemeinsamen Drehachse (32a) liegen und in einen gemeinsamen Walzenkörper (41) integriert sind.

8. Ansaugvorrichtung nach einem der Ansprüche 5 bis 7, **dadurch gekennzeichnet, dass** der Antrieb des ersten Verschlussorgans (21, 30, 31, 35, 41) durch eine direkte mechanische Übertragung eines Drehmomentes von einem Bauteil der Brennkraftmaschine erfolgt, welches in Abhängigkeit von der Drehzahl der Brennkraftmaschine rotiert.

## Claims

1. Intake manifold device for an internal combustion engine, featuring at least
- an intake (12) for the combustion air,
- an intake port (14) per cylinder of the internal combustion engine which reaches up to a cylinder-sided outlet (15) which can be closed by an intake valve (18),
- a first shut-off member (21, 30, 31, 35, 41) which is located upstream the intake valve (18) in the intake port by which one part of the intake port is designed as storage port (22) between the first shut-off member and at the intake valve,
**characterized in that** a pressure accumulator (24) is provided for, which is connected to the storage port via a connection channel (23) and in which a second shut-off member (25, 26) is located, the pressure accumulator being fed by a secondary-air pump (27) which is also intended to feed fresh air into an exhaust system (20) of the internal combustion engine via a pressurizing valve (28).

2. Intake manifold device according to claim 1, **characterized in that** the second shut-off member consists of a lockable non-return valve (26).

3. Intake manifold device according to one of the above claims, **characterized in that** the first shut-off member consists of a swiveling flap (30).

4. Intake manifold device according to claim 3, **characterized in that** a swiveling axis of the swiveling flap (30) is located outside the flown-through cross section of the intake port (14) and the swiveling direction for closing the swiveling flap basically corresponds to the direction of the intake air flow in the intake port.

5. Intake manifold device according to one of the claims 1 or 2, **characterized in that** the first shut-off member consists of a rotary disk (31) the rotating axis (32) of which is located outside the cross section of the intake port (14) and which cuts this cross section completely, the disk featuring a window (34) which - depending on the angular position of the disk - opens the cross section at least partially.

6. Intake manifold device according to one of the claims 1 or 2, **characterized in that** the first shut-off member consists of a rotary valve (35).

7. Intake manifold device according to claim 6, **characterized in that** several intake ports are provided for which are disposed parallel to each other in such a way that the rotary valves are located on a common axis of rotation (32a) and integrated in a common cylinder body (41).

8. Intake manifold device according to one of the claims 5 to 7, **characterized in that** the drive of the first shut-off member (21, 30, 31, 35, 41) is realized by a direct mechanical transmission of a torque from a subassembly of the internal combustion engine which rotates depending on the speed of the internal combustion engine.

## Revendications

1. Dispositif d'aspiration pour un moteur à combustion interne, présentant au moins
- une admission (12) pour l'air de combustion,
- un canal d'aspiration (14) par cylindre du moteur à combustion interne allant jusqu'à une sortie (15) située du coté du cylindre et pouvant être obturée par une soupape d'admission (18),
- un premier organe de fermeture (21, 30, 31, 35, 41) disposé dans le canal d'aspiration, en amont de la soupape d'admission (18), ayant pour conséquence qu'entre le premier organe de fermeture et la soupape d'admission, une partie de la conduite d'aspiration est réalisée comme canal d'accumulation (22),
**caractérisé en ce qu'**un accumulateur de pression (24) est prévu, lequel est relié au canal d'accumulation par un canal de jonction (23) et dans lequel un deuxième organe de fermeture (25, 26) est disposé, l'accumulateur de pression étant alimenté par une pompe à air secondaire (27) qui sert simultanément à introduire de l'air frais dans une installation de gaz d'échappement (20) du moteur à combustion interne par l'intermédiaire d'une soupape de distribution (28).

2. Dispositif d'aspiration selon la revendication 1, **caractérisé en ce que** le deuxième organe de fermeture est composé d'un clapet antiretour (26) pouvant être obturé.

3. Dispositif d'aspiration selon une des revendications précédentes, **caractérisé en ce que** le premier organe de fermeture est composé d'un clapet pivotant (30).

4. Dispositif d'aspiration selon la revendication 3, **caractérisé en ce qu'**un axe de pivotement du clapet pivotant (30) se trouve hors de la section du canal d'aspiration (14) traversée par le flux et que le sens de pivotement pour fermer le clapet pivotant correspond essentiellement au sens du flux de l'air d'admission dans le canal d'aspiration.

5. Dispositif d'aspiration selon une des revendications 1 ou 2, **caractérisé en ce que** le premier organe de fermeture est composé d'un disque rotatif (31) dont l'axe de rotation (32) se trouve hors de la section du canal d'aspiration (14) et coupe entièrement cette section, le disque présentant une fenêtre (34) qui ouvre la section, tout au moins partiellement, en fonction de la position angulaire du disque.

6. Dispositif d'aspiration selon une des revendications 1 ou 2, **caractérisé en ce que** le premier organe de fermeture est composé d'une vanne rotative (35).

7. Dispositif d'aspiration selon la revendication 6, **caractérisé en ce que** plusieurs canaux d'aspiration sont prévus, lesquels sont disposés de manière parallèle les uns aux autres de sorte que les vannes rotatives se trouvent sur un axe rotatif commun (32a) et soient intégrées dans un corps de cylindre commun (41).

8. Dispositif d'aspiration selon une des revendications 5 à 7, **caractérisé en ce que** l'entraînement du premier organe de fermeture (21, 30, 31, 35, 41) est assuré par une transmission mécanique directe d'un couple de rotation d'un composant du moteur à combustion interne, ce composant tournant en fonction de la vitesse de rotation du moteur à combustion interne.
